# EUROPEAN PATENT APPLICATION

(11) **EP 1 408 197 A1**
(43) Date of publication of application: **14.04.2004**
(21) Application number: 02738694.5
(22) Date of filing: 13.06.2002
(51) Int. Cl.: F01D 5/28, F01D 11/00, F02C 7/28, C25D 7/00, C25D 15/02

(54) **METHOD FOR FORMING ABRASION-RESISTANT LAYER FOR MOVING BLADE, ABRASION-RESISTANT LAYER AND METHOD FOR REGENERATION THEREOF, AND GAS TURBINE**

(30) Priority: 13.06.2001 JP 2001179053
(71) Applicant: Mitsubishi Heavy Industries, Ltd., Tokyo (JP)
(72) Inventor: TORIGOE, Taiji, Takasago-shi, Hyogo 676-8686 (JP); OKADA, Ikuo, Takasago-shi, Hyogo 676-8686 (JP); TAKAHASHI, Kouji, Takasago-shi, Hyogo 676-8686 (JP); OHARA, Minoru, Takasago-shi, Hyogo 676-8686 (JP); AOKI, Sunao, Takasago-shi, Hyogo 676-8686 (JP); MEGA, Masahiko, Takasago-shi, Hyogo 676-8686 (JP)
(74) Representative: Henkel, Feiler & Hänzel
(86) International application number: PCT/JP2002/005911
(87) International publication number: WO 2002/103165

(57) **Abstract**

The method of the present invention comprises a steps of performing nickel strike plating onto a base material (11), thereby forming a first plating layer, performing nickel plating, in which alloy particles containing at least Cr, Al and Y are dispersed, onto the first plating layer, thereby forming a second plating layer, performing nickel plating, in which alloy particles containing at least Cr, Al and Y and hard particles (16) are dispersed, on the second plating layer, thereby forming a third plating layer, performing plating, in which alloy particles containing at least Cr, Al and Y are dispersed, onto the third plating layer, thereby forming a fourth plating layer such that the hard particles (16) of the third plating layer are partly exposed, and performing intermediate heating process to the plating layers to diffuse the alloy particles throughout the plating layers, thereby forming an alloy layer (18).

## Description

### Technical Field

The present invention relates to a method of forming an abrasion-resistant layer of a rotor blade, an abrasion-resistant layer, and a method of regenerating the abrasion-resistant layer, and a gas turbine. More specifically, the present invention is applied to a high temperature part such as a rotor blade to be used in industrial gas turbines and jet engines, and so forth.

### Background Art

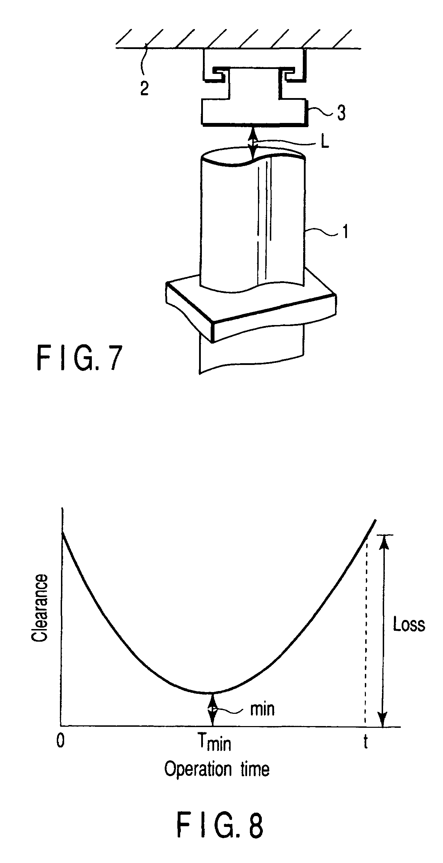

It is well known that a rotor blade (turbine blade) 1 used in gas turbines etc., is arranged at a predetermined distance from a separation ring 3, which is fixed to a casing 2 as shown in FIG. 7. The tip portion of the separation ring 3 is generally formed of a ZrO₂-based ceramic such as TBC.

Up to present, to improve the efficiency of a gas turbine, means for reducing the clearance L between the turbine blade 1 and the separation ring 3 have been investigated. However, if the clearance L is reduced excessively, the turbine blade 1 and the separation ring 3 may be in contact with each other due to deformation of the casing 2 when heated. As a result, the turbine blade 1 may be damaged. It is therefore necessary to keep a certain degree of the clearance. More specifically, the clearance between the turbine blade and the separation ring varies along with the operation time of the turbine blade.

To explain more specifically, when the turbine blade is heated up, it reaches high temperature quickly, whereas the casing does not reach the high temperature so quickly, as shown in FIG. 8. Because of this, the clearance, although it is large in the beginning of the turbine-blade operation, becomes narrow with the passage of the operation time and reaches a minimum at a time point (Tₘᵢₙ). If the operation is further continued, the clearance again increases (see time-point t). When the operation of the turbine is continued for a long time, the casing is gradually deformed. It is therefore impossible to avoid the occurrence of the contact between the casing and the blade even during the normal operation. Such contact is, of course, not favorable.

To prevent the contact, anti-abrasion coating called abrasive coating is applied onto a turbine blade of an airplane engine. The abrasive coating comprises a matrix formed of MCrAlY and hard particles embedded in the matrix. Symbol M of MCrAlY stands for an alloy containing at least one of Ni and Co. The hard particles used herein are a mixture of particles including Al₂O₃ (alumina), SiC (silicon carbide), Si₃N₄ (silicon nitride), cBN (cubic boron nitride), and others.

Of them, cBN is unfavorable as the hard particles for use in industrial gas turbines used at high temperature for a long time, because cBN is oxidized at a high temperature of 900°C or more. However, the MCrAlY matrix alone cannot attain sufficient oxidation resistance.

### Disclosure of Invention

A first object of the present invention is to provide a method of forming a rotor-blade abrasion-resistant layer excellent in oxidation resistance and durable for a long time operation, comprising the steps of: performing nickel strike plating onto a base material, thereby forming a first plating layer; performing nickel plating, in which alloy particles containing at least Cr, Al and Y are dispersed, onto the first plating layer, thereby forming a second plating layer; performing nickel plating, in which alloy particles containing at least Cr, Al and Y and hard particles are dispersed, onto the second plating layer, thereby forming a third plating layer; performing plating, in which alloy particles containing at least Cr, Al and Y are dispersed, onto the third plating layer, thereby forming a fourth plating layer such that the hard particles of the third plating layer are partly exposed; and performing intermediate heating process to the plating layers to diffuse the alloy particles throughout the plating layers, thereby forming an alloy layer.

A second object of the present invention is to provide a rotor-blade abrasion-resistant layer excellent in oxidation resistance and durable for a long time operation, which is constructed by forming an alloy layer, in which alloy particles containing at least Cr, Ar and Y are diffused, on a base material such that hard particles are partly exposed.

A third object of the present invention is to provide a gas turbine improved in efficiency by reducing the clearance between the rotor blade and the separation ring as narrow as possible by constructing the gas turbine comprising: a rotor blade on the surface of which the rotor-blade abrasion-resistant layer according to claim 4 is formed; a separation ring fixed to a casing so as to face the rotor blade; and a stator blade arranged near the casing and between the aforementioned rotor blade and another rotor blade arranged next thereto.

A fourth object of the present invention is to provide a gas turbine improved in efficiency by reducing the clearance between the rotor blade and the separation ring as narrow as possible by constructing the gas turbine comprising: a rotor blade on the surface of which the rotor-blade abrasion-resistant layer according to claim 5 is formed; a separation ring fixed to a casing so as to face the rotor blade; and a stator blade arranged near the casing and between the aforementioned rotor blade and another rotor blade arranged next thereto.

A fifth object of the present invention is to provide a method of readily regenerating a rotor-blade abrasion-resistant layer excellent in oxidation resistance and durable for a long time operation, by comprising the steps of: removing the entire alloy layers on a base material, when the alloy layer is ground to the extent that the hard particles fall off along with the operation time of the rotor blade, and performing the steps of the first invention.

A sixth object of the present invention is to provide a method of readily regenerating a rotor-blade abrasion-resistant layer excellent in oxidation resistance and durable for a long time operation, comprising the steps of: removing the alloy layers on a base material while leaving the part of the alloy layer corresponding to the first plating layer, when an alloy layer is ground to the extent that the hard particles fall off along with the operation time of the rotor blade; and performing the steps of the first invention on or after the step of forming a second plating layer.

A seventh object of the present invention is to provide a method of readily generating a rotor-blade abrasion-resistant layer excellent in oxidation resistance and durable for a long time operation, comprising the steps of: removing the alloy layers on a base material while leaving the part of the alloy layers corresponding to the first and second plating layers, when an alloy layer is ground to the extent that the hard particles fall off along with the operation time of the rotor blade, and performing the steps of the first invention on or after the step of forming a third plating layer.

The first invention is directed to a method of forming an abrasion-resistant layer on the tip portion of a rotor blade of a machine such as a turbine or jet engine, which is arranged near the separation ring fixed to a casing. This method comprises the steps of: performing nickel strike plating onto a base material, thereby forming a first plating layer; performing nickel plating, in which alloy particles containing at least Cr, Al and Y are diffused, onto the first plating layer, thereby forming a second plating layer; performing nickel plating, in which alloy particles containing at least Cr, Al and Y and hard particles are diffused, onto the second plating layer, thereby forming a third plating layer; performing plating, in which alloy particles containing at least Cr, Al and Y are diffused, onto the third plating layer, thereby forming a fourth plating layer such that the hard particles of the third plating layer are partly exposed; and performing intermediate heating process to the plating layers to diffuse the alloy particles throughout the plating layers, thereby forming an alloy layer.

The second invention is directed to a rotor-blade abrasion-resistant layer formed on the tip of the rotor blade of a machine such as a turbine or jet engine which is arranged near a separation ring fixed to a casing, characterized in that an alloy layer, in which alloy particles containing at least Cr, Ar and Y are dispersed and diffused and the hard particles are partly exposed, is formed on a base material.

The third invention of the present invention is directed to a gas turbine characterized by comprising a rotor blade having the rotor-blade abrasion-resistant layer according to claim 4 formed on the surface; a separation ring fixed to a casing so as to face the rotor blade; and a stator blade arranged near the casing and between the aforementioned rotor blade and another rotor blade arranged next thereto.

The fourth invention of the present invention is directed to a gas turbine characterized by comprising a rotor blade having the rotor-blade abrasion-resistant layer according to claim 5 formed on the surface; a separation ring fixed to a casing so as to face the rotor blade; and a stator blade arranged near the casing and between the aforementioned rotor blade and another rotor blade arranged next thereto.

The fifth invention of the present invention is directed to a method of regenerating a rotor-blade abrasion-resistant layer, which is formed on the tip of a rotor blade of a machine such as a turbine or jet engine arranged near a separation ring fixed to a casing, and which has an alloy layer, in which alloy particles containing at least Cr, Al and Y are dispersed and diffused and hard particles are partly exposed. The method comprises removing the entire alloy layers on a base material, when the alloy layer is ground to the extent that the hard particles fall off along with the operation time of the rotor blade, and then performing the steps of the first invention.

The sixth invention of the present invention is directed to a method of regenerating a rotor-blade abrasion-resistant layer, which is formed on the tip of a rotor blade of a machine such as a turbine or jet engine arranged near a separation ring fixed to a casing, and which has an alloy layer, in which alloy particles containing at least Cr, Al and Y are dispersed and diffused and hard particles are partly exposed. The method comprises removing the alloy layer while leaving the part of the alloy layer corresponding to a first plating layer on a base material, when the alloy layer is ground to the extent that the hard particles fall off along with the operation time of the rotor blade, and thereafter performing steps on or after the step of forming a second plating layer according to the first invention.

The seventh invention of the present invention is directed to a method of regenerating a rotor-blade abrasion-resistant layer, which is formed on the tip of a rotor blade of a machine such as a turbine or jet engine arranged near a separation ring fixed to a casing, and which has an alloy layer, in which alloy particles containing at least Cr, Al and Y are dispersed and diffused and hard particles are partly exposed. The method comprises removing the alloy layer while leaving the part of the alloy layer corresponding to first and second plating layers on a base material, when the alloy layer is ground to the extent that the hard particles fall off along with the operation time of the rotor blade, and thereafter steps on or after the step of forming a third plating layer according to claim 1 are performed.

According to the present invention, it is possible to provide a rotor-blade abrasion-resistant layer excellent in oxidation resistance and durable for a long time operation and to provide a method of forming the rotor-blade abrasion-resistant layer.

Furthermore, according to the present invention, it is possible to provide a method of regenerating a rotor-blade abrasion-resistant layer excellent in oxidation resistance and durable for along time operation in a simple process.

More over, according to the present invention, since the clearance between the rotor blade and the separation ring can be reduced as narrow as possible, the efficiency can be improved. In addition, sufficient oxidation resistance can be maintained even if the rotor blade is used for a long time like that of an industrial gas turbine and the rotor blade can be easily repaired.

### Brief Description of Drawings

FIGS. 1A to F illustrate a method of forming an abrasion-resistant layer according to Embodiment 1 of the present invention in accordance with order of manufacturing steps;
FIGS. 2A to C illustrate a method of regenerating an abrasion-resistant layer according to Embodiment 2 of the present invention in accordance with order of manufacturing steps;
FIG. 3 is a magnified metallographic picture (x 40) of an abrasion-resistant layer in the step of FIG. 1E observed under microscopy;
FIG. 4 is a magnified metallographic picture (x100) of an abrasion-resistant layer in the step of FIG. 1F observed under microscopy;
FIG. 5 is a magnified metallographic picture (×40) of an abrasion-resistant layer in the step shown in FIG. 1E observed under microscopy;
FIG. 6 is a magnified metallographic picture (×40) of an abrasion-resistant layer in the step of FIG. 1F observed under microscopy;
FIG. 7 illustrates the positional relationship between a turbine blade and a separation ring;
FIG. 8 is a characteristic graph showing the relationship between operation time and the clearance between the turbine blade and the separation ring;
FIGS. 9A to D illustrate the method of regenerating an abrasion-resistant layer according to Embodiment 3 of the present invention in accordance with order of the manufacturing steps;
FIGS. 10A to C illustrate the method of regenerating an abrasion-resistant layer according to Embodiment 4 of the present invention in accordance with order of the manufacturing steps; and
FIG. 11 illustrates a gas turbine according to Embodiment 5 of the present invention.

### Best Mode for Carrying Out the Invention

Now, the present invention will be described in detail below.

In the present invention, a first plating layer is formed by strike plating on a base material for preventing oxidation of the base material. The strike plating is performed by use of a bath containing nickel chloride and hydrochloric acid, however it is not limited to this. The time and current during electrolysis may be appropriately set. The alloy particles containing at least Cr, Al and Y in the present invention include those containing only Cr, Al and Y or those containing these elements and other elements.

In the present invention, intermediate heating process is preferably performed at a heating processing temperature of 500 to 1100°C for 0.5 to 3 hours under a gaseous atmosphere such as N₂, Ar, or He. This is because diffusion within the coating does not virtually proceed in the temperature range of less than 500°C, whereas the diffusion proceeds excessively when the temperature exceeds 1100°C. In the latter case, the quality of the coating may change. From this, if the heating is performed within the range of 500 to 1100°C, a uniform film can be obtained.

On the other hand, if the heating process time is less than 0.5h, the diffusion of the coating rarely proceeds, whereas when the time exceeds 3 hours, the manufacturing cost greatly increases. Thus, if the heating process is performed for the time ranging from 0.5 to 3 hours, sufficient diffusion can be attained at reasonable cost.

In the present invention, after the intermediate heating process is performed to form an alloy layer, Al or Al-Si diffusion process is preferably performed to form an Al-diffusion layer or Al-Si diffusion layer on the surface of the alloy layer. Since the surface of the alloy layer is more hardened by the formation of the diffusion layer, the oxidation resistance of the abrasion-resistant layer can be further improved.

In the prevent invention, there is a description reading "forming an alloy layer by diffusing alloy particles in the plating layer by the intermediate heating process". This means as follows. Since MCrAlY particles are only dispersed in the plating layer prior to the intermediate heating process, and the abrasion resistance layer is nonuniform and inferior in oxidation resistance. Therefore, to improve the oxidation resistance of the abrasion resistance layer, MCrAlY particles are chemically combined with particles such as Ni to form an alloy.

In the present invention, since the alumina particles embedded in the alloy layer are increasingly exposed along with the operation time of the turbine blade and finally ground and fall off, the abrasion-resistant layer formed on the tip of the turbine blade loses its original function. Therefore, the third to fifth inventions are concerned with regeneration of the abrasion-resistant layer, which is performed by appropriately removing the remaining alloy layer. More specifically, in the third invention, after the alloy layer is completely removed, the entire steps of the first invention are repeated. Furthermore, in the fourth and fifth inventions, after the entire alloy layer is completely removed, the steps of the first invention are repeated from the middle to regenerate the abrasion resistance layer (the alloy layer). Therefore, it is possible to regenerate the abrasion-resistant layer excellent in oxidation resistance and durable for a long time operation in a simple procedure without damaging the base material of the turbine blade.

Next, methods of forming and regenerating an abrasion-resistant layer according to Embodiments of the present invention will be described. The materials and numerical values for each portions described in the embodiments below are just examples but not limit the scope of the present invention.

### (Embodiment 1)

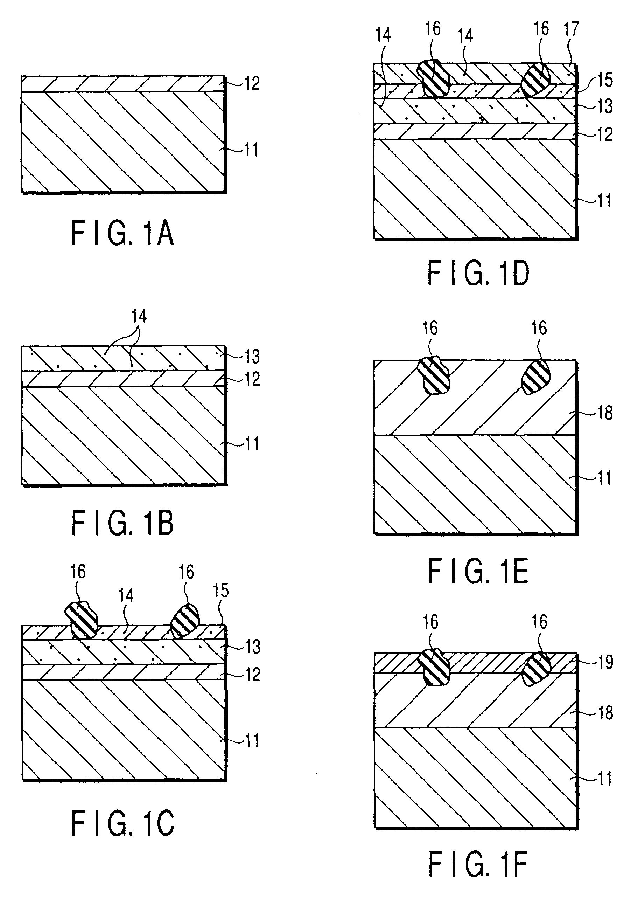

Referring to FIGS. 1A to F, explanation will be made.

First, nickel plating strike was applied onto a base material 11 formed of a Ni-based alloy, thereby forming a first plating layer 12 (see FIG. 1). The nickel plating was performed by use of a bath containing 250 g/l of nickel chloride and 110 cc/l of hydrochloride for 3 minutes while supplying a current of 15A/dm².

Next, a Ni plating solution which contains particles including Co-32wt%Ni-21wt%Cr-8wt%Al-0.5wt%Y (hereinafter referred to as "MCrAlY") was applied onto the first plating layer 12 to form a second plating layer 13 (see FIG. 1B). Note that reference numeral 14 of FIG. 1B indicates MCrAlY particles.

Sequently, a Ni plating solution, in which both MCrAlY particles 14 and alumina particles (hard particles, i.e., a mixture of Al₂O₃, SiC, cBN particles others) 16 were dispersed, was applied onto the second plating layer 13. As a result, a third plating layer 15 was formed (see FIG. 1C). Such hard particles are used by two reasons below. First, alumina is stable up to a temperature of several hundreds degrees in excess of one thousand. Second, since cBN is also stable up to 900°C, the grindability of the cBN is excellent until the temperature reaches 900°C. Note that most of the hard particles 16 is exposed in the step shown in FIG. 1C.

Subsequently, Ni plating, in which MCrAlY particles 14 are dispersed, was performed until the alumina particles 16 are almost covered, thereby forming a fourth plating layer 17 (see FIG. 1D).

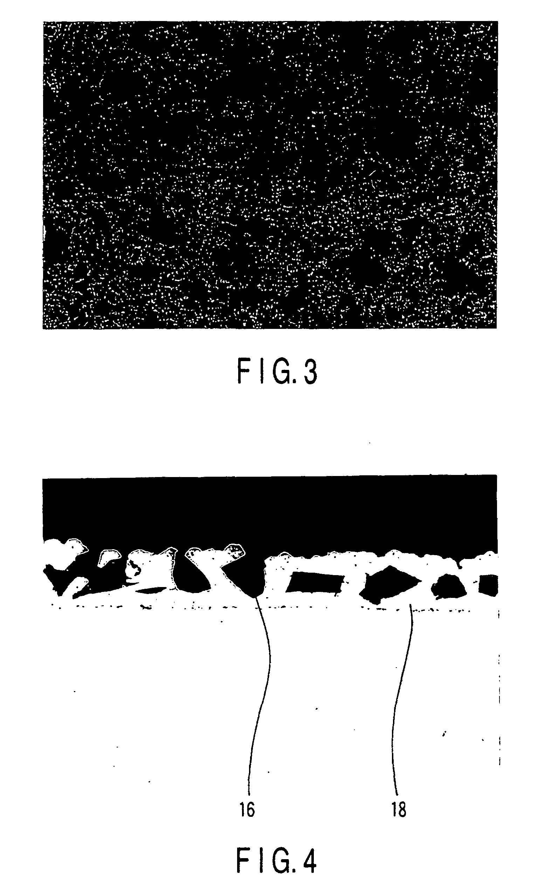

Furthermore, intermediate heating process was performed to diffuse the MCrAlY particles throughout the individual plating layers 13, 15 and 17 to form an alloy layer 18 (see FIGS. 1E, 3 and 4). The intermediate heating process was performed in an N₂ atmosphere at a temperature of 1080°C for 4 hours. Note that FIG. 3 shows a microphotograph (magnification: ×40) of the surface of the layer shown in FIG. 1E and FIG. 4 shows a microphotograph (magnification: × 100) of the cross-section of the layer shown in FIG. 1E.

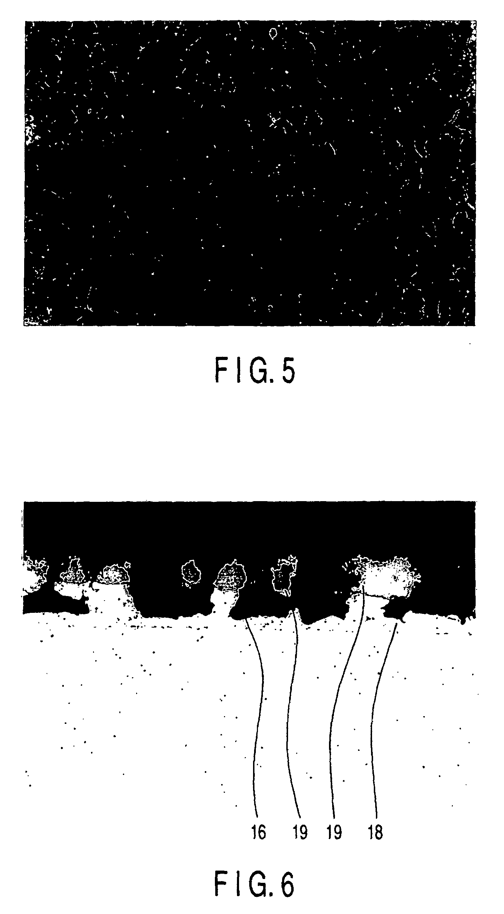

Thereafter, Al diffusion was performed to improve the oxidation resistance of the alloy layer 18. By this process, an Al diffusion layer 19 was formed on the surface of the alloy layer 18 obtained after the diffusion process of FIG. 1E. As a result, a rotor-blade abrasion-resistant layer was formed (see FIGS. 1F, 5 and 6). Note that FIG. 5 is a microphotograph (magnification: ×40) of the surface of the layer shown in FIG. 1F and FIG. 6 shows a microphotograph (magnification: × 100) of the cross-section of the layer shown in FIG. 1F. In these photographs, the hard particles 16 of the alloy layer 18 are exposed from the surface of the Al diffusion layer 19.

The rotor-blade abrasion-resistant layer is formed in accordance with Embodiment 1 as shown in FIG. 1F, where the alloy layer 18 containing both Ni and Co, in which the alumina particles 16 are partially exposed and MCrAlY particles 14 are dispersed and diffused, is formed on the base material. Accordingly, when a turbine blade 1 having the abrasion-resistant layer formed thereon is arranged near a separation ring 3, as shown in FIG. 7, even if the tip portion of the turbine blade 1 comes into contact with the separation ring 3 during operation, the separation ring 3 is not ground or damaged by the alumina particles 16 exposed from the abrasion-resistant layer. Hence, it is possible to reduce the clearance between the separation ring 3 and the turbine blade 1 as compared with a conventional case, with the result that the efficiency of the turbine can be improved.

Note that as the MCrAlY particles used in Embodiment 1 are formed of an alloy containing both Ni and Co. However, the particles are not limited to these. MCrAlY particles containing at least one element selected from the group consisting of Ni, Co, and other alloys may be used.

In Embodiment 1, after the alloy layer is formed, Al is diffused. However, the element to be diffused is not limited to Al. Al-Si may be diffused.

### (Embodiment 2)

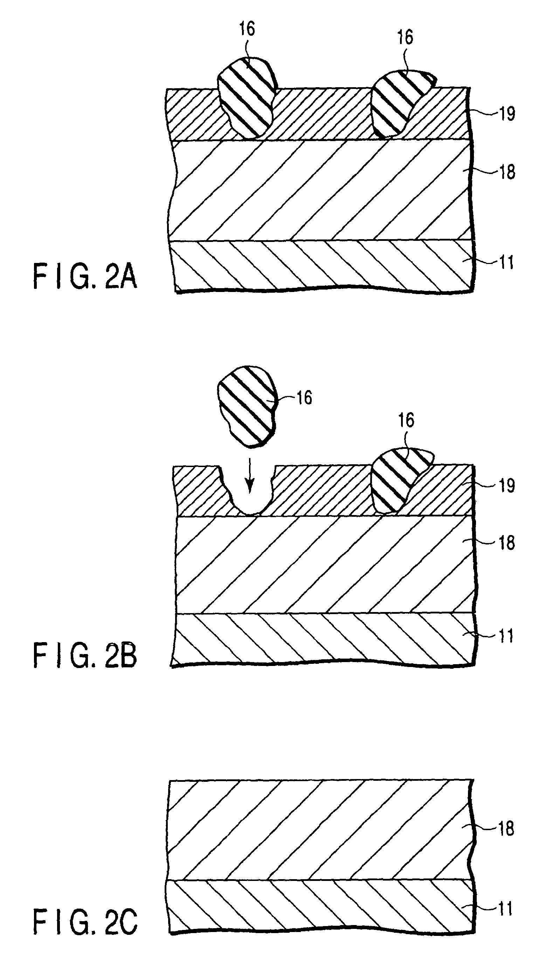

Referring to FIGS. 2A to C, explanation will be made. Embodiment 2 relates to a method of regenerating an abrasion-resistant layer when the abrasion-resistant layer is ground along with the operation time of the turbine blade. More specifically, before the rotor blade 1 comes into contact with the separation ring 3 in FIG. 7, the hard particles 16 are embedded in the surface of the rotor-blade abrasion-resistant layer, namely, the Al diffusion layer 19, as shown in FIG. 2A. However, with the passage of time after the rotor blade 1 comes into contact with the separation ring 3, the Al diffusion 19 is gradually ground. As a result, the alumina particles 16 which have been almost embedded in the Al diffusion layer 19 come out and fall off as shown in FIG. 2B. Subsequently, the Al diffusion layer 19 is removed while leaving the part of the alloy layer 18 corresponding to the first and second plating layers 12 and 13 of FIG. 1, as shown in FIG. 2C. Thereafter, the steps shown in FIGS. 1C to F are performed as described in Embodiment 1 to make up for the damage of the abrasion-resistant layer and complete the regeneration.

According to Embodiment 2, even if the Al diffusion layer 19 is ground by the contact between the rotor blade 1 and the separation ring 3, the regeneration of the abrasion-resistant layer excellent in oxidation resistance and durable for a long time operation can be attained in a simple method.

### (Embodiment 3)

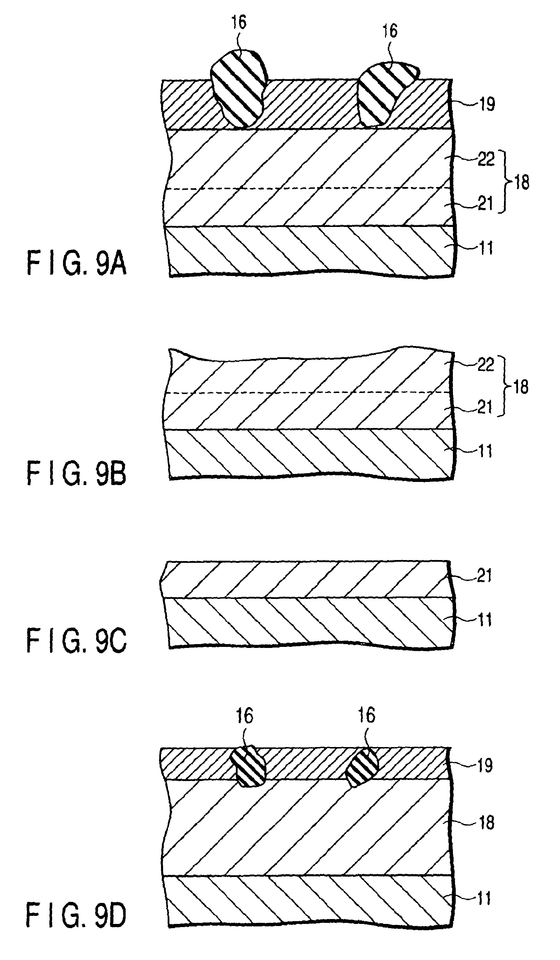

Referring to FIGS. 9A to D, explanation will be made. Embodiment 3 relates to a method of regenerating an abrasion-resistant layer if it is ground along with the operation time of the turbine blade. More specifically, Embodiment 3 deals with a case where the portion of the alloy layer 18 from the surface to the part corresponding to the second plating layer 13 is damaged along with the operation time of the turbine blade.

More specifically, before the rotor blade 1 comes into contact with the separation ring 3 in FIG. 7, the hard particles 16 are embedded in the surface of the rotor-blade abrasion-resistant layer, namely, the Al diffusion layer 19, as shown in FIG. 9A. Note that, in FIG. 9A, the alloy layer 18 is formed of the alloy portion 21 corresponding to the first plating layer and the alloy portion 22 corresponding to the second plating layer 2.

With the passage of time after the rotor blade 1 comes into contact with the separating ring 3, not only the Al diffusion layer 19 but also the part (surface portion) of the alloy portion 22 corresponding to the second plating layer are gradually ground and damaged (see FIG. 9B). Accordingly, the entire alloy portion 22 is removed (see FIG. 9C). Thereafter, the steps shown in FIGS. 1C to 1F described in Embodiment 1 are performed to regenerate an abrasion-resistant layer (see FIG. 9D).

According to Embodiment 3, even if not only the Al diffusion layer 19 but also the alloy potion 22 corresponding to the second plating layer are ground by the contact between the rotor blade 1 and the separation ring 3, the abrasion-resistant layer excellent in oxidation resistance and durable for a long time operation can be regenerated in a simple method.

### (Embodiment 4)

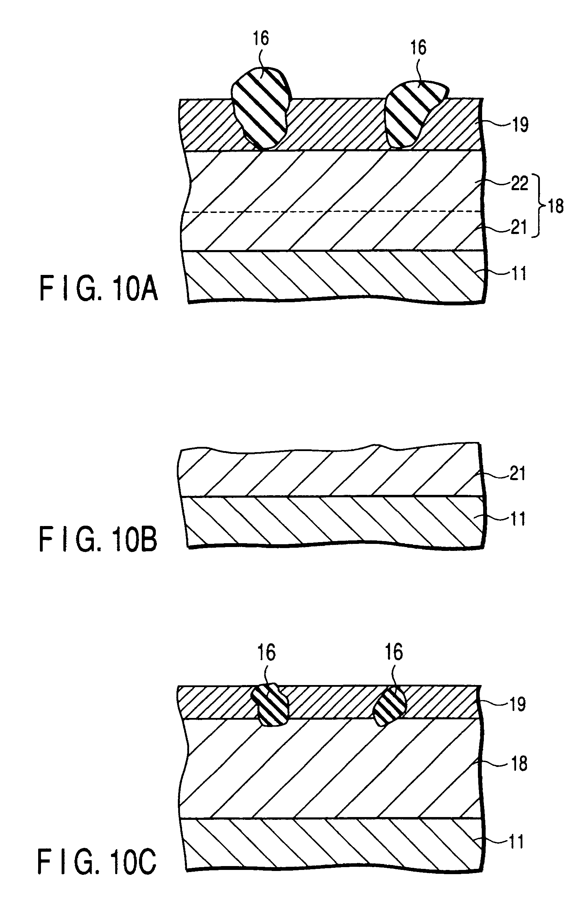

Referring to FIGS. 10A to C, explanation will be made. Embodiment 4 is concerned with a method of regenerating an abrasion-resistant layer when it is ground along with the operation time of the turbine blade. More specifically, Embodiment 4 deals with the case where the portion of the alloy layer 18 from the top to the part corresponding to the first plating layer 12 is damaged along with the operation time of the turbine blade.

More specifically, before the rotor blade 1 comes into contact with the separation ring 3 in FIG. 7, the hard particles 16 are embedded in the top surface of the rotation blade abrasion-resistant layer, namely, the Al diffusion layer 19, as shown in FIG. 10A. Note that in FIG. 10A, the alloy layer 18 consists of the alloy portion 21 corresponding to the first plating layer and the alloy portion 22 corresponding to the second plating layer.

With the passage of time after the rotor blade 1 comes into contact with the separation ring 3, not only the Al diffusion layer 19 and the part of the alloy portion 22 corresponding to the second plating layer but also the part (surface portion) of the alloy portion 21 corresponding to the first plating layer are ground and damaged (see FIG. 10B). Therefore, after the portion 21 is completely removed, the steps shown in FIGS. 1B to 1F described in Embodiment 1 are performed to regenerate an abrasion-resistant layer (see FIG. 10D).

According to Embodiment 4, even if not only the Al diffusion layer 19 and the alloy portion 22 corresponding to the second plating layer but also the alloy portion 21 corresponding to the first plating layer are ground, the abrasion-resistant layer excellent in oxidation resistance and durable for a long time operation can be regenerated in a simple method.

### (Embodiment 5)

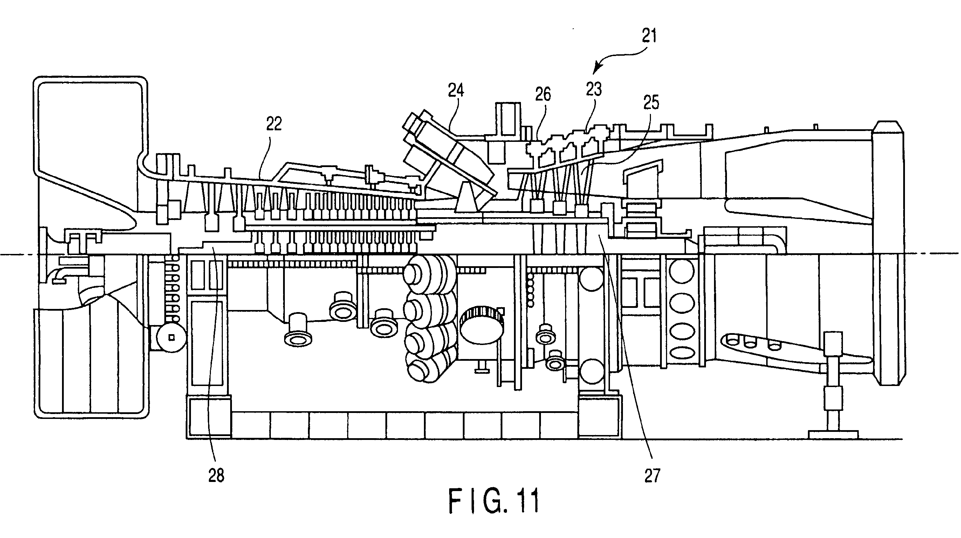

FIG. 11 shows a cross-section of the gas turbine according to Embodiment 5 of the present invention.

A gas turbine 21 has a compressor 22 and a turbine 23 directly connected to each other. The compressor 22 used herein is, for example, an axial-flow compressor, which increases the pressure by taking in air or a predetermined gas as a functional fluid through an inlet port. The output port of the compressor 22 is equipped with a combustor 24. The functional fluid discharged from the compressor 22 is heated up by the combustor 22 to a predetermined turbine inlet temperature. The functional fluid increased in temperature to a predetermined value is then supplied to the turbine 23.

Inside the casing of the turbine 23, gas turbine stator blades 26 are fixed in several stages. Each of the stator blades 26 is provided near the casing and between adjacent gas turbine rotor blades 25. The rotor blade 25 comprises a base material and a rotor-blade abrasion-resistant layer, which is formed on the surface of the base material. The rotor-blade abrasion-resistant layer is an alloy layer in which alloy particles containing at least Cr, Ar and Y are dispersed and diffused. The gas turbine rotor blade 25 is attached to a main shaft 27 so as to form a set of stage with each stator blade 26.

Also, as shown in FIG. 7, the separation ring is fixed to the casing so as to face the rotor blade 25. One end of the main shaft 27 is connected to the rotation shaft 28 of the compressor 22. The other end is connected to the rotation shaft of a motor (not shown).

In the gas turbine thus constructed, when a highpressure and high-temperature functional fluid is supplied into the casing of the turbine 23 from the combustor 24, the functional fluid is expanded within the casing, thereby rotating the main shaft 27 and driving the motor (not shown). To be more specific, the functional fluid is reduced in pressure by the stator blades 26 fixed to the casing and the kinetic energy produced by the pressure reduction is converted into a rotation torque by way of the motor blades 25 attached to the main shaft 27. Subsequently, the rotation torque thus generated is transmitted to the main shaft to drive the motor.

The gas turbine of Embodiment 5 comprises a gas turbine rotor blade 25 having a rotor-blade abrasion-resistant layer formed on the surface, a separation ring fixed to the casing so as to face the rotor blade 25, and a gas turbine stator blade 26 provided near the casing and between the rotor blade 25 and the adjacent rotor blade. Owning to this structure, the clearance between the rotor blade 26 and the separation ring can be reduced as narrow as possible, with the result that the efficiency can be improved. Furthermore, even if the gas turbine is used for a long time like an industrial gas turbine, sufficient oxidation resistance can be maintained and the repair of the gas turbine can be made easily.

## Claims

1. A method of forming an abrasion-resistant layer on a tip portion of a rotor blade of a machine such as a turbine or jet engine which is arranged near a separation ring fixed to a casing, **characterized by** comprising the steps of:
performing nickel strike plating onto a base material, thereby forming a first plating layer;
performing nickel plating, in which alloy particles containing at least Cr, Al and Y are dispersed, onto the first plating layer, thereby forming a second plating layer;
performing nickel plating, in which alloy particles containing at least Cr, Al and Y and hard particles are dispersed, on the second plating layer, thereby forming a third plating layer;
performing plating, in which alloy particles containing at least Cr, Al and Y are dispersed, onto the third plating layer, thereby forming a fourth plating layer such that the hard particles of the third plating layer are partly exposed; and
performing intermediate heating process to the plating layers to diffuse the alloy particles throughout the plating layers, thereby forming an alloy layer.

2. The method of forming a rotor-blade abrasion-resistant layer according to claim 1, **characterized in that**, after the alloy layer is formed, an Al diffusion process or an Al-Si diffusion process is performed to form an Al or Al-Si diffusion layer on a surface of the alloy layer.

3. The method of forming the rotor-blade abrasion-resistant layer according to claim 1, **characterized in that** the intermediate heating process is performed at a temperature of 500 to 1100°C for 0.5 to 3 hours in an inert gas atmosphere.

4. A rotor-blade abrasion-resistant layer formed on a tip of a rotor blade of a machine such as a turbine or a jet engine, which is arranged near a separation ring fixed on a casing, **characterized in that** hard particles are partially exposed, and an alloy layer, in which alloy particles containing at least Cr, Al and Y are dispersed and diffused, is formed on a base material.

5. The rotator blade abrasion-resistant layer according to claim 4, **characterized in that** an Al or Al-Si diffusion layer is formed on the surface of the alloy layer such that the hard particles are partially exposed thereon.

6. A gas turbine **characterized by** comprising a rotor blade with the rotor-blade abrasion-resistant layer according to claim 4 on the surface thereof, a separation ring fixed to the casing so as to face the rotation blade, and a stator blade provided near the casing and between the rotor blade and an adjacent rotor blade.

7. The gas turbine **characterized by** comprising a rotor blade with the rotor-blade abrasion-resistant layer according to claim 5 on the surface thereof, a separation ring fixed to the casing so as to face the rotation blade, and a stator blade provided near the casing and between the rotor blade and an adjacent rotor blade.

8. A method of regenerating a rotor-blade abrasion-resistant layer on a tip portion of a rotor blade of a machine such as a turbine or a jet engine, which is arranged near a separation ring fixed to a casing, the rotor-blade abrasion-resistant layer comprising an alloy layer in which alloy particles containing at least Cr, Al and Y are dispersed and diffused such that the hard particles are partially exposed, **characterized in that**, when the alloy layer is ground to the extent that the hard particles fall off along with operation time of the rotor blade, the alloy layer on the base material is entirely removed and thereafter the steps according to claim 1 are performed.

9. A method of regenerating a rotor-blade abrasion-resistant layer on a tip portion of a rotor blade of a machine such as a turbine or a jet engine, which is arranged near a separation ring fixed to a casing, the rotor-blade abrasion-resistant layer comprising an alloy layer in which alloy particles containing at least Cr, Al and Y are dispersed and diffused such that the hard particles are partially exposed, **characterized in that**, when the alloy layer is ground to the extent that the hard particles fall off along with operation time of the rotor blade, the alloy layer on a base material is removed while leaving the part of the alloy layer corresponding to the first plating layer, and thereafter steps on or after the step of forming a second plating layer according to claim 1 are performed.

10. A method of regenerating a rotor-blade abrasion-resistant layer on a tip portion of a rotor blade of a machine such as a turbine or a jet engine, which is arranged near a separation ring fixed to a casing, the rotor-blade abrasion-resistant layer comprising an alloy layer in which alloy particles containing at least Cr, Al and Y are dispersed and diffused such that the hard particles are partially exposed, **characterized in that**, when the alloy layer is ground to the extent that the hard particles fall off along with operation time of the rotor blade, the alloy layer on a base material is removed while leaving the part of the alloy layer corresponding to the first and second plating layers, and thereafter steps on or after the step of forming a third plating layer according to claim 1 are performed.
